Europäisches Patentamt

European Patent Office

Office européen des brevets

(19)

(11) Numéro de publication: **0 298 815 B1**

(12) **FASCICULE DE BREVET EUROPEEN**

(45) Date de publication du fascicule du brevet:
31.10.90

(51) Int. Cl.⁵: **F01N 7/18**, F16L 27/06

(21) Numéro de dépôt: **88401574.4**

(22) Date de dépôt: **22.06.88**

(54) **Accouplement flexible.**

(30) Priorité: **02.07.87 FR 8709388**
**02.07.87 FR 8709389**

(43) Date de publication de la demande:
**11.01.89 Bulletin 89/2**

(45) Mention de la délivrance du brevet:
**31.10.90 Bulletin 90/44**

(84) Etats contractants désignés:
**DE FR GB IT**

(56) Documents cités:
**DE-A- 2 353 914**
**DE-A- 2 701 022**
**DE-A- 2 822 049**
**FR-A- 1 259 811**
**US-A- 1 434 631**
**US-A- 4 427 220**

(73) Titulaire: **JACQUES DUBOIS, 82 rue A. Badin,**
**F-76360 Barentin(FR)**

(72) Inventeur: **Brandener, Louis, 80 avenue F. Lefebvre,**
**78300 Poissy(FR)**

(74) Mandataire: **Fruchard, Guy et al, CABINET**
**BOETTCHER 23, rue la Boétie, F-75008 Paris(FR)**

ACTORUM AG

## Description

La présente invention concerne un accouplement d'échappement flexible ente deux tronçons de tube d'échappement.

On sait que lors du montage d'une voiture, et plus particulièrement d'une voiture à moteur transversal, il est nécessaire de prévoir un accouplement flexible entre le collecteur d'échappement, fixé au moteur, et le tuyau d'échappement, fixé à la carrosserie et supportant le pot d'échappement.

On connaît déjà des accouplements flexibles entre deux tronçons de tube pour la circulation d'un gaz. En particulier, le brevet américain 4.427.220 décrit un accouplement flexible comportant un premier tronçon de tube d'échappement et un second tronçon de tube d'échappement, dans lequel le premier tronçon de tube d'échappement comporte une partie de pivotement en forme d'anneau sphérique s'étendant en saillie par rapport à une partie de surface externe cylindrique du premier tronçon de tube d'échappement, un joint d'échappement annulaire en appui sur une surface interne de la partie de pivotement, un organe anti-friction maintenu en appui sur un côté externe de la partie de pivotement, et un boîtier porté par le second tronçon de tube d'échappement à l'intérieur de celui-ci et appliquant le joint annulaire et l'organe anti-friction contre la partie de pivotement.

La structure du boîtier de cet accouplement est extrêmement complexe et est totalement incompatible avec les impératifs de coûts imposés dans certains domaines, en particulier dans le domaine des tubes d'échappement pour les moteurs d'automobiles. De plus, en raison de la disposition du boîtier à l'intérieur du second tronçon de tube, ce boîtier est directement soumis aux gaz circulant dans les tronçons de tube. Cette structure est donc incompatible avec l'utilisation de l'accouplement sur des tronçons de tube d'échappement de moteurs automobiles dans lesquels la température des gaz est très élevée.

Un but de la présente invention est de proposer un accouplement d'échappement flexible de structure simple, facile à réaliser, peu onéreux, et assurant néanmoins une bonne étanchéité entre les tronçons de tube d'échappement.

En vue de la réalisation de ce but, on prévoit selon l'invention un accouplement d'échappement flexible du type précité dans lequel le boîtier comporte une collerette en tôle fixée au second tube d'échappement et s'étendant vers l'extérieur de celui-ci, et au moins un secteur d'appui en tôle fixé le long d'un bord extérieur à un bord extérieur de la collerette.

Ainsi, le boîtier forme un ensemble compact non soumis directement au gaz d'échappement et présentant en outre une raideur suffisante pour minimiser le bruit émis lorsque l'accouplement est soumis à des vibrations.

Selon un mode de réalisation de l'invention l'organe anti-friction est un second joint annulaire et le secteur d'appui est formé par une bague annulaire ayant une paroi en Z dont une aile est fixée à la collerette et une aile prend appui sur l'organe anti-friction.

Selon un autre mode de réalisation de l'invention, l'organe anti-friction comporte deux segments anti-friction en arc de cercle disposés symétriquement par rapport à un axe du second tronçon de tube d'échappement, et le boîtier comporte deux secteurs d'appui en arc de cercle ayant chacun une paroi en Z dont une aile est fixée à la collerette et une aile prend appui sur l'organe anti-friction correspondant.

Selon des caractéristiques avantageuses de l'invention, les secteurs d'appui comprennent un rebord interne replié par rapport à l'aile correspondante du secteur d'appui, ce qui augmente la rigidité du boîtier, et les joints annulaires sont réalisés en tricot métallique comprimé, ce qui permet d'obtenir une souplesse de fonctionnement de l'accouplement tout en maintenant l'étanchéité de celui-ci.

D'autres caractéristiques et avantages apparaîtront à la lecture de la description qui suit de deux modes de réalisation particuliers non limitatifs de l'invention en liaison avec les dessins ci-joints parmi lesquels :

- la figure 1 est une vue en coupe axiale d'un premier mode de réalisation d'accouplement selon l'invention,
- la figure 2 est une vue en bout d'un second mode de réalisation d'accouplement selon l'invention.
- la figure 3 est une vue en coupe axiale selon la ligne III-III du second mode de réalisation de la figure 2.

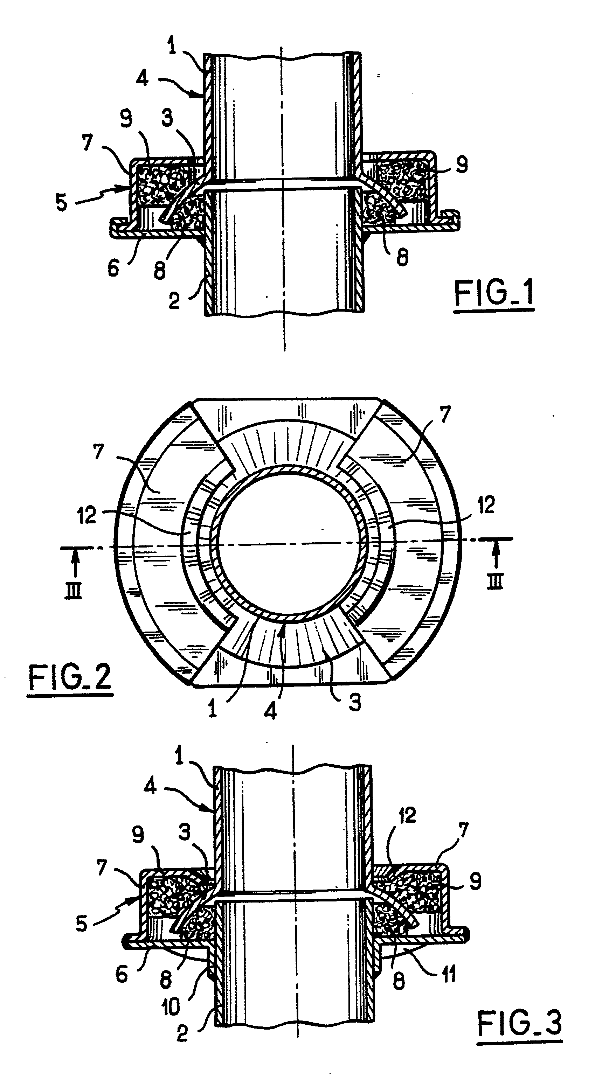

En référence à la figure 1, le premier mode de réalisation d'accouplement d'échappement flexible selon l'invention comporte un premier tronçon de tube d'échappement 1 et un second tronçon de tube d'échappement 2. A son extrémité, le premier tronçon de tube d'échappement 1 comporte une partie de pivotement 3 en forme d'anneau sphérique ayant une surface interne concave et une surface externe convexe. La partie de pivotement 3 est réalisée par exemple par emboutissage de l'extrémité du premier tronçon de tube d'échappement 1 de sorte que la partie de pivotement 3 s'étend en saillie par rapport à une partie de surface externe cylindrique 4 du premier tronçon de tube d'échappement.

Par ailleurs, une collerette annulaire circulaire en tôle découpée 6 est fixée de façon étanche, par exemple par soudage, au second tronçon de tube d'échappement 2, le long d'un bord interne de la collerette 6. La collerette 6 s'étend perpendiculairement à l'axe longitudinal du second tronçon de tube d'échappement 2 et est fixée à celui-ci au voisinage d'une de ses extrémités. La collerette 6 s'étend en saillie vers l'extérieur par rapport à la paroi du second tronçon de tube d'échappement. L'extrémité du second tronçon de tube d'échappement portant la collerette 6 est engagée dans l'anneau sphérique 3 formé à l'extrémité du premier tronçon de tube d'échappement. Un secteur d'appui en forme de bague circulaire annulaire 7 ayant une section en Z est associée à la collerette 6 par un sertissage réalisé le long du bord extérieur de la collerette 6 pour retenir le bord extérieur de l'aile inférieure de la bague annulaire 7 afin de réaliser une liaison étanche entre la collerette 6 et la bague annulaire 7. La bague annulaire 7 est de préférence réalisée en tôle emboutie. La collerette 6 et la bague annulaire 7 forment ainsi un boîtier généralement désigné en 5 entourant la partie de pivotement 3 et pouvant être réalisé de façon très économique.

Un premier joint annulaire 8, de préférence un joint en tricot métallique comprimé, est disposé autour de l'extrémité du second tronçon de tube d'échappement 2 et comporte une surface convexe prenant appui sur la surface interne concave de la partie de pivotement 3. Un organe anti-friction 9 est formé par un second joint annulaire réalisé en tricot métallique comprimé associé à un matériau anti-friction et est disposé à l'intérieur du secteur d'appui en forme de bague annulaire 7. le second joint annulaire 9 comporte une surface concave prenant appui sur une surface externe convexe de la partie de pivotement 3. De préférence, le premier joint annulaire 8 et le second joint annulaire 9 se recouvrent partiellement selon une direction axiale des tronçons de tube d'échappement 1 et 2.

Vis-à-vis des gaz d'échappement s'écoulant à l'intérieur des tronçons de tube d'échappement, les joints 8 et 9 forment, avec la partie de pivotement 3 et le boîtier 5, une barrière mobile pratiquement étanche tout en permettant un mouvement relatif du premier et du second tronçon de tube d'échappement l'un par rapport à l'autre.

Les figures 2 et 3 illustrent un second mode de réalisation qui comporte, comme le premier mode de réalisation, un premier tronçon de tube d'échappement terminé par une partie de pivotement 3 en forme d'anneau sphérique associé à un second tronçon de tube d'échappement 2. La collerette annulaire 6 est comme précédemment fixée perpendiculairement au second tronçon de tube d'échappement 2. La collerette 6 comporte cette fois une jupe cylindrique 10 qui peut être obtenue par emboutissage d'une tôle et qui entoure le second tronçon de tube d'échappement 2 sur lequel elle est fixée. Dans ce mode de réalisation, le boîtier 5 comporte deux secteurs d'appui 7 en arc de cercle disposés symétriquement par rapport à l'axe du second tronçon de tube ayant chacun une paroi en Z dont l'aile inférieure est soudée le long de son bord extérieur au bord extérieur de la collerette 6, et une aile supérieure qui prend appui sur deux segments anti-friction 9 en arc de cercle. Ces segments anti-friction étant de préférence des tronçons de joints annulaires réalisés par compression d'un tricot métallique avec un matériau anti-friction tel que du mica ou du graphite. Afin d'éviter que les organes anti-friction 9 ne s'échappent par l'une des extrémités latérales des secteurs d'appui 7, on prévoira avantageusement des butées, non représentées, formées en repliant radialement le bord latéral des secteurs d'appui 7. Les segments anti-friction 9 et les secteurs d'appui 7 s'étendent de préférence sur une partie seulement du pourtour de la partie de pivotement 3 afin de ne pas déborder de façon sensible par rapport au diamètre extérieur de la partie de pivotement 3. De préférence, la collerette 6 comporte également des rebords rabattus 11 entre les secteurs d'appui 7, ce qui a le double avantage d'assurer une raideur plus grande de la collerette 6 et de diminuer l'encombrement de l'accouplement selon une direction par rapport à laquelle les secteurs d'appui sont disposés symétriquement.

Dans le mode de réalisation illustré, chacun des secteurs d'appui 7 s'étend environ sur un quart du pourtour de la partie de pivotement 3.

Dans le mode de réalisation préféré illustré, chaque secteur d'appui 7 comprend un rebord interne 12 replié vers le segment anti-friction 9 par rapport à l'aile correspondante du secteur d'appui. Le rebord replié 12 présente le double avantage d'assurer une raideur plus grande du secteur d'appui 7 et de maintenir plus fermement en place le segment anti-friction 9 correspondant.

On remarquera que la partie de pivotement 3 est maintenue appliquée sur le joint annulaire 8 mais peut glisser par rapport à celui-ci, de sorte que l'effort sur le secteur d'appui 7 est principalement dirigé suivant l'axe du second tronçon de tube d'échappement et ne correspond qu'à la composante axiale du mouvement relatif des deux tronçons de tube, ce qui minimise considérablement la fatigue des secteurs d'appui 7.

Bien entendu l'invention n'est pas limitée aux modes de réalisation décrits et on peut y apporter des variantes de réalisation sans sortir du cadre de l'invention. En particulier, on peut augmenter l'élasticité axiale de l'accouplement en prévoyant une matière fibreuse non tissée à l'intérieur de la masse de tricot métallique comprimée du joint annulaire 8 ou de l'organe anti-friction 9. Le premier joint annulaire 8 peut également être réalisé en céramique. Ce premier joint annulaire a de préférence également des propriétés anti-friction, par exemple en associant un matériau anti-friction tel qu'une feuille de mica ou une feuille de graphite à une feuille métallique préalablement à la compression de celle-ci. Par ailleurs, les moyens de fixation de la collerette 6 et des secteurs d'appui 7 ne sont pas limitatifs. En particulier, dans le mode de réalisation de la figure 1, on peut souder la bague annulaire 7 à la collerette 6. On peut également, dans ce premier mode de réalisation, prévoir un rebord rabattu 12 le long du bord interne de la bague annulaire 7.

**Revendications**

1. Accouplement d'échappement flexible entre un premier tronçon de tube d'échappement (1) et un second tronçon de tube d'échappement (2), dans lequel le premier tronçon de tube d'échappement (1) comporte une partie de pivotement (3) en forme d'anneau sphérique s'étendant en saillie par rapport à une partie de surface externe cylindrique (4) du premier tronçon de tube d'échappement, un premier joint d'échappement annulaire (8) en appui sur une surface interne de la partie de pivotement (3), au moins un organe anti-friction (9) maintenu en appui sur un côté externe de la partie de pivotement (3), et un boîtier (5) porté par le second tronçon de tube d'échappement et appliquant le joint annulaire et l'organe anti-friction contre la partie de pivotement (3), caractérisé en ce que le boîtier comporte une collerette en tôle (6) fixée au second tronçon de tube d'échappement et s'étendant vers l'extérieur de celui-ci, et au moins un secteur d'appui en tôle (7) fixé le long d'un bord extérieur à un bord extérieur de la collerette (6).

2. Accouplement d'échappement flexible selon la revendication 1, caractérisé en ce que l'organe anti-friction est un second joint annulaire et en ce que le secteur d'appui est formé par une bague annulaire (7) ayant une paroi en Z dont une aile est fixée à la collerette et une aile prend appui sur l'organe anti-friction (9).

3. Accouplement d'échappement selon la revendication 2, caractérisé en ce que le secteur d'appui (7) comporte un rebord interne (12) replié par rapport à l'aile correspondante du secteur d'appui.

4. Accouplement d'échappement selon la revendication 2, caractérisé en ce que le premier joint annulaire est un joint en tricot métallique comprimé.

5. Accouplement d'échappement selon la revendication 2, caractérisé en ce que le second joint annulaire (9) est réalisé en tricot métallique comprimé associé à un matériau anti-friction .

6. Accouplement d'échappement selon la revendication 1, caractérisé en ce que l'organe anti-friction comporte deux segments anti-friction en arc de cercle disposés symétriquement par rapport à un axe du second tronçon de tube d'échappement, et en ce que le boîtier comporte deux secteurs d'appui (7) en arc de cercle ayant chacun une paroi en Z dont une aile est fixée à la collerette (6) et une aile prend appui sur l'organe anti-friction correspondant.

7. Accouplement d'échappement selon la revendication 6, caractérisé en ce que les secteurs d'appui comprennent un rebord interne (12) replié par rapport à l'aile correspondante du secteur d'appui (7).

8. Accouplement d'échappement selon la revendication 6, caractérisé en ce que le premier joint annulaire est un joint en tricot métallique comprimé.

9. Accouplement d'échappement selon la revendication 6, caractérisé en ce que les segments anti-friction (9) sont réalisés en tricot métallique comprimé associé à un matériau anti-friction .

## Claims

1. A flexible exhaust coupling between a first length of exhaust pipe (1) and a second length of exhaust pipe (2), in which the first length of exhaust pipe (1) comprises a pivot portion (3) in the form of a spherical ring projecting outwardly from a cylindrical outside surface portion (4) of the first length of exhaust pipe, a first annular exhaust gasket (8) pressing against an inside surface of the pivot portion (3), at least one anti-friction member (9) pressed against an outside surface of the pivot portion (3), and a housing (5) carried by the second length of the exhaust pipe and pressing both the annular gasket and the anti-friction member against the pivot portion (3), characterized in that the housing comprises a sheet metal collar (6) fixed to the second length of exhaust pipe and extending outwardly therefrom, together with at least one sheet metal bearing sector (7) having an outside edge fixed to the outside edge of the collar (6).

2. A flexible exhaust coupling according to claim 1, characterized in that the anti-friction member is a second annular gasket and in that the bearing sector is formed by an annular ring (7) having a Z-shaped wall with one of its arms fixed to the collar and with another arm bearing against the anti-friction member (9).

3. An exhaust coupling according to claim 2, characterized in that the bearing sector (7) includes an internal rim (12) folded down relative to the corresponding arm of the bearing sector.

4. An exhaust coupling according to claim 2, characterized in that the first annular gasket is a compressed metal knit gasket.

5. An exhaust coupling according to claim 2, characterized in that the second annular gasket (9) is made of compressed metal associated with an anti-friction material.

6. An exhaust coupling according to claim 1, characterized in that the anti-friction member comprises two anti-friction segments in the form of circular arcs disposed symmetrically about an axis of the second length of exhaust pipe, and in that the housing comprises two bearing sectors (7) in the forms of circular arcs each having a Z-shaped wall with one arm fixed to the collar (6) and with another arm bearing against the corresponding anti-friction member. ·

7. An exhaust coupling according to claim 6, characterized in that the bearing sectors include an internal rim (12) folded relative to the corresponding arm of the bearing sector (7).

8. An exhaust coupling according to claim 6, characterized in that the first annular gasket is a compressed metal knit gasket.

9. An exhaust coupling according to claim 6, characterized in that the anti-friction segments (9) are made of compressed metal knit associated with an anti-friction material.

## Patentansprüche

1. Flexible Auspuffverbindung zwischen einem ersten Auspuffrohrstück (1) und einem zweiten Auspuffrohrstück (2), bei der das erste Auspuffrohrstück (1) einen Schwenkabschnitt (3) in Gestalt eines kugelförmigen Ringes, der gegenüber einem Abschnitt der äußeren Zylinderfläche (4) des ersten Rohrstückes vorspringt; eine erste, an der Innenfläche des Schwenkabschnittes (3) anliegende ringförmige Auspuffdichtung (8); mindestens ein, in Anschlag mit einer Außenseite des Schwenkabschnittes (3) stehendes Antireibungselement (9); und ein vom zweiten Auspuffrohrstück getragenes Gehäuse (5), das die ringförmige Dichtung und das Antireibungselement gegen den Schwenkabschnitt (3) drückt, aufweist, dadurch gekennzeichnet, daß das Gehäuse einen am zweiten Auspuffrohrstück befestigten Blechkragen (6), der sich vom Rohr weg nach außen erstreckt, und mindestens einen Stützabschnitt (7) aus Blech aufweist, der entlang eines äußeren Randes mit einem äußeren Rand des Kragens (6) verbunden ist.

2. Flexible Auspuffverbindung nach Anspruch 1, dadurch gekennzeichnet, daß das Antireibungselement eine zweite ringförmige Dichtung ist, und daß der Stützabschnitt aus einem kreisförmigen Ring (7) mit einer Z-förmigen Wand gebildet ist, wovon ein Schenkel mit dem Stützkragen verbunden ist und ein anderer Schenkel am Antireibungselement (g) anliegt.

3. Flexible Auspuffverbindung nach Anspruch 2, dadurch gekennzeichnet, daß der Stützabschnitt (7) eine innere Krempe (12) besitzt, die in Bezug auf den zugehörigen Schenkel des Stützabschnittes abgebogen ist.

4. Flexible Auspuffverbindung nach Anspruch 2, dadurch gekennzeichnet, daß die erste ringförmige Dichtung eine Dichtung aus verdichtetem Metallgewebe ist.

5. Flexible Auspuffverbindung nach Anspruch 2, dadurch gekennzeichnet, daß die zweite ringförmige Dichtung (9) aus verdichtetem Metallgewebe in Verbindung mit einem Antireibungsmaterial besteht.

6. Flexible Auspuffverbindung nach Anspruch 1, dadurch gekennzeichnet, daß das Antireibungselement zwei kreisbogenförmige Antireibungssegmente umfaßt, die symmetrisch zur Achse des zweiten Auspuffrohrstückes angeordnet sind, und daß das Gehäuse zwei kreisbogenförmige Stützabschnitte (7) umfaßt, von denen jedes eine Z-förmige Wand besitzt, wovon ein Schenkel mit dem Kragen (6) verbunden ist und ein anderer Schenkel am zugehörigen Antireibungselement anliegt.

7. Flexible Auspuffverbindung nach Anspruch 6, dadurch gekennzeichnet, daß die Stützabschnitte eine innere Krempe (12) aufweisen, die relativ zum entsprechenden Schenkel des Stützabschnittes abgebogen ist.

8. Flexible Auspuffverbindung nach Anspruch 6, dadurch gekennzeichnet, daß die erste ringförmige Dichtung eine Dichtung aus verdichtetem Metallgewebe ist.

9. Flexible Auspuffverbindung nach Anspruch 6, dadurch gekennzeichnet, daß die Antireibungssegmente (9) aus verdichtetem metallischem Gewebe in Verbindung mit einem Antireibungsmaterial bestehen.

_FIG_1_

_FIG_2_

_FIG_3_